# FASCICULE DE BREVET EUROPEEN

(11) **EP 2 530 877 B1**
(45) Date de publication et mention de la délivrance du brevet: **22.01.2020**
(21) Numéro de dépôt: 12170719.4
(22) Date de dépôt: 04.06.2012
(51) Int. Cl.: H04L 12/28, H04L 12/24, H04L 29/06

(54) **Système et procédés d'instrumentation**
Instrumentierungssystem und -verfahren
Instrumentation system and methods

(30) Priorité: 03.06.2011 FR 1154856
(43) Date de publication de la demande: 05.12.2012
(73) Titulaire: Greencom Networks GmbH, 81673 Münich (DE)
(72) Inventeur: Brie, Olivier, 06410 BIOT (FR); Pinson, Mathieu, 06740 Chateauneuf Grasse (FR); Alegret, Sébastien, 06650 Le Rouret (FR)
(74) Mandataire: Hautier, Nicolas

(56) Documents cités:
- EP-A1- 1 278 391
- WO-A2-2005/091218
- CA-A1- 2 525 199

## Description

Le domaine technique de l'invention est celui des architectures de système de communication pour l'instrumentation. De tels systèmes comprennent un grand ou très grand nombre de capteurs typiquement plusieurs centaines à plusieurs millions de capteurs. Ces systèmes comprennent également des moyens de gestion de ces capteurs ainsi que des moyens de communication, afin de permettre la commande, la supervision et l'obtention de mesures de ces capteurs, vers au moins un serveur central d'application.

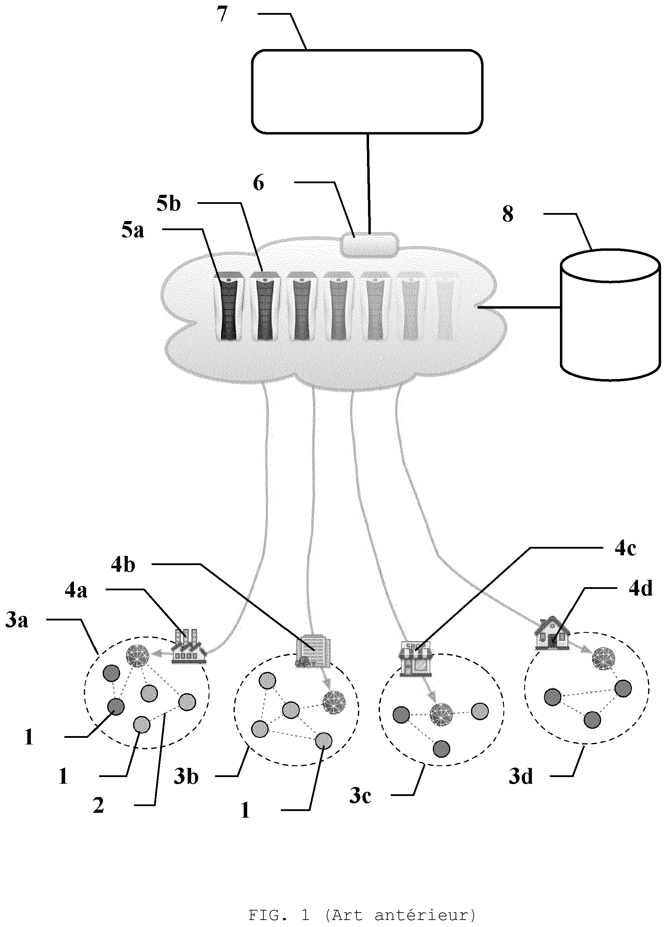

En référence à la figure 1, un tel système d'instrumentation selon l'art antérieur, comprend typiquement des capteurs 1, des passerelles 4, et au moins un serveur central d'application 5.

Du fait de leur grand nombre, les capteurs 1 sont regroupés en ensembles 3a-3d, génériquement désignés 3. Chaque tel ensemble 3 est assemblé autour d'une passerelle 4a-4d, génériquement désignée 4. Les capteurs 1 disposent de moyens de communication 2 de bas niveau leur permettant de s'interfacer avec ladite passerelle 4 via un coordinateur du réseau de capteurs. Ces moyens de communication 2 de bas niveau comprennent typiquement des réseaux de terrains (CAN, I2C, etc...) dédiés aux capteurs, mais ne permettant pas une connexion à un réseau de communication de haut niveau, tel Internet.

Une passerelle 4 est apte à se connecter à un réseau de communication. Une passerelle 4 a pour rôle d'interfacer les capteurs 1 d'un ensemble 3 et de leur offrir un accès à et les services d'un réseau de communication.

Via le réseau de communication, typiquement Internet, les différentes passerelles 4 dialoguent avec ledit au moins un serveur central d'application 5. Ce dialogue permet essentiellement la remontée des mesures issues des capteurs 1 depuis les passerelles 4 vers ledit au moins un serveur central d'application 5. Il permet encore la descente de commandes, par exemple de configuration, à destination des capteurs 1 ou des passerelles 4 elles-mêmes.

Un serveur central d'application 5 a pour fonction de rassembler des données de mesure issues des capteurs 1 ainsi que leur historique et de les tenir à disposition d'une application 7. Les données fournies par un serveur central d'application 5, sont mises à disposition d'une application 7 via une interface 6. Un serveur central d'application 5 stocke de manière centralisée ou distribuée les données dans une mémoire 8.

Une telle architecture utilisée classiquement aujourd'hui présente de nombreux inconvénients. Un système selon l'art antérieur ne possède pas de lien descendant direct. Lorsqu'un serveur central d'application souhaite un tel lien, il doit réaliser un accès direct individuel via le réseau de communication à chaque passerelle. Un tel accès direct n'est de plus pas toujours possible, par exemple pour des raisons de sécurité. Ainsi, à titre d'exemple, une passerelle située dans un réseau d'entreprise, peut se voir refuser un accès direct par la politique de sécurité de l'entreprise.

De plus un tel système est souvent conçu pour répondre à un besoin spécifique. De ce fait, il se retrouve limité et présente une capacité limitée lors d'un passage à l'échelle, vers un système comprenant un plus grand nombre de capteurs.

Le déploiement de capteurs additionnels dans un système existant nécessite un temps significatif ce qui peut s'avérer très pénalisant lorsque des dizaines de milliers de capteurs additionnels doivent être déployés.

Un autre inconvénient est l'absence de sécurité lors de la remontée de données.

La fiabilité d'une liaison entre passerelles, et donc capteurs, et serveur central d'application ne saurait être garantie. Cette liaison peut être interrompue. Il n'est généralement rien prévu pour gérer la situation lors de la reprise d'une telle liaison après son interruption.

Le serveur central d'application est tout entier orienté vers le service de mise à disposition de données. Il ne permet pas de réaliser une supervision des capteurs et ne permet aucune vision d'ensemble du système constitué de l'ensemble des passerelles/capteurs.

Le document EP1278391 divulgue des appareils de communication basés sur plusieurs plates-formes, par exemple un téléphone du type à bouton poussoir, un ordinateur personnel et un téléphone portable, sont connectés à une station de base (comprend un serveur central d'application et un serveur intermédiaires d'échange) via un réseau public ou via l'Internet, toute opération est guidée depuis la station de base par guidage vocal ou par page Web, et la station de base commande à distance un appareil électrique en réponse à une opération effectuée par l'utilisateur de l'appareil de communication. Le programme guide, le guidage vocal et la page Web dans la station de base peuvent être mis à jour par une opération de mémorisation dans la station de base et une fonction peut être ajoutée et modifiée facilement.

La présente invention a pour objectif d'améliorer les systèmes connus en remédiant à l'un au moins de ces inconvénients.

L'invention concerne un système d'instrumentation selon la revendication 1 et un procédé d'utilisation selon la revendication 3.

Selon un mode de réalisation avantageux et optionnel, le serveur intermédiaire d'échange est configuré pour : recevoir du serveur central d'application un message de commande comprenant un identifiant de passerelle, un identifiant de commande et une commande ; transmettre ce message de commande à la passerelle ayant un identifiant correspondant à l'identifiant de passerelle indiqué dans le message de commande; recevoir de la passerelle un message de réponse comprenant l'identifiant de la passerelle, l'identifiant de commande et des données de réponse ; transmettre le message de réponse au serveur central d'application.

La passerelle est configurée de manière à: recevoir d'au moins un capteur des données de mesure, se connecter et initier au moins une session de communication avec au moins un serveur intermédiaire d'échange, transmettre au serveur intermédiaire d'échange un message comprenant un identifiant de passerelle, au moins un identifiant de capteur et au moins certaines desdites données de mesure ; et dans lequel le serveur intermédiaire d'échange est configuré pour transmettre ledit message au serveur central d'application. Ainsi, dans ce mode de réalisation, la passerelle fait remonter des données issues des capteurs de sa propre initiative, c'est-à-dire sans avoir reçu au préalable une commande de la part du serveur central d'application pour faire remonter ces mesures.

Dans un mode de réalisation particulier, le système ne comprend qu'un unique serveur intermédiaire d'échange. Tous les échanges entre la ou les passerelles et le (ou les) serveur central d'application passent donc tous par cet unique serveur intermédiaire d'échange. Ce mode de réalisation peut être combiné avec l'ensemble des caractéristiques décrites dans la présente description.

Un procédé d'ajout d'une passerelle dans un tel système d'instrumentation, comprend les étapes suivantes : création, par ladite passerelle, d'un identifiant unique de passerelle, optionnellement assorti d'un code secret, connexion de ladite passerelle à un serveur intermédiaire d'échange dédié à l'ajout de passerelle, et demande de création d'un compte passerelle, en relation avec ledit identifiant, création d'un compte passerelle associé à ladite passerelle, notification au dit au moins un serveur central d'application de ladite création de compte passerelle.

Ainsi, l'intégration d'une nouvelle passerelle et éventuellement de capteurs qui lui sont associés s'effectue de manière particulièrement simple.

Ainsi, la passerelle est configurée pour initier elle-même les communications vers le serveur intermédiaire d'échange afin d'envoyer des données au serveur central d'application. Par exemple, si la passerelle détecte une valeur particulière mesurée par un capteur, elle peut déclencher une session de communication avec le serveur intermédiaire d'échange. La passerelle est ainsi en mesure de faire remonter des données, telles que des alertes ou des événements, de sa propre initiative et sans qu'un opérateur ou que le serveur central d'application ne requiert cette remontée de données.

Ainsi, le système d'autorisé pas de connexion directe entre le serveur central d'application et la ou les passerelles. Tous les échanges entre le serveur central d'application et la ou les passerelles s'effectuent par l'intermédiaire du serveur intermédiaire d'échange. Avantageusement, il n'y a pas de connexion directe entre serveur central d'application et passerelles.

De manière préférée, le procédé d'ajout d'une passerelle peut en outre présenter au moins l'une quelconque des caractéristiques et étapes facultatives suivantes.

Selon une autre caractéristique, le procédé d'ajout d'une passerelle comprend encore une étape de validation dudit compte passerelle.

Selon une autre caractéristique, le procédé d'ajout d'une passerelle comprend encore une étape de création, par un serveur central d'application, d'une nouvelle entrée correspondant à ladite passerelle dans une base de données d'inventaire.

Selon une autre caractéristique, le procédé d'ajout d'une passerelle comprend encore les étapes de : affectation, par un serveur central d'application, d'un serveur intermédiaire d'échange de commande, à ladite passerelle, envoi, par ledit serveur central d'application, des paramètres de connexion au dit serveur intermédiaire d'échange de commande, à ladite passerelle.

Typiquement, l'affectation d'un serveur intermédiaire d'échange de commandes ou l'affectation d'un serveur intermédiaire d'échange de données s'effectue selon des règles prédéterminées. De préférence, cette affectation s'effectue de manière dynamique. Typiquement, les affectations prennent en compte la répartition de charge des différents serveurs d'échange. Alternativement, l'affectation d'un serveur peut résulter du fait qu'un serveur d'échange a été dédié à un type de données ou un type de capteurs ou un type de passerelles. L'affectation peut également prendre en compte la localisation de la passerelle ajoutée et/ou des capteurs associés à cette passerelle ajoutée.

Selon une autre caractéristique, le procédé d'ajout d'une passerelle comprend encore les étapes de : connexion de ladite passerelle au dit serveur intermédiaire d'échange de commande et établissement d'une session, au moyen desdits paramètres de connexion, afin d'échanger des commandes.

Selon une autre caractéristique, le procédé d'ajout d'une passerelle comprend encore les étapes de : affectation, par un serveur central d'application, d'un premier serveur intermédiaire d'échange de donnée, à ladite passerelle, envoi, par ledit serveur central d'application, des paramètres de connexion au dit premier serveur intermédiaire d'échange de donnée, à ladite passerelle.

Ainsi, ce procédé permet de dissocier le flux de commande du flux de données. Une telle dissociation est avantageuse en ce qu'elle permet de garantir que le flux de commande reste parfaitement fonctionnel et réactif, quel que soit le volume de donnée. En outre, cela permet avantageusement d'avoir des serveurs de commande et de données qui sont bien distincts et donc que la charge engendrée sur le serveur de données n'impacte pas le serveur de commande. De manière également avantageuse, cette dissociation des flux peut être effectuée de manière dynamique. Ainsi on peut n'avoir qu'un seul flux et qu'un seul serveur, puis en fonction de la quantité de données, on peut créer un flux dynamiquement pour le diriger vers un serveur dédié, de sorte à préserver un flux fonctionnel et disponible.

Selon une autre caractéristique, le procédé d'ajout d'une passerelle comprend encore les étapes de : demande, par un serveur central d'application ou par une passerelle, d'affectation d'un serveur intermédiaire d'échange de donnée supplémentaire, à ladite passerelle, affectation, par un serveur central d'application, d'un serveur intermédiaire d'échange de donnée supplémentaire, à ladite passerelle, envoi, par ledit serveur central d'application, des paramètres de connexion au dit serveur intermédiaire d'échange de donnée supplémentaire, à ladite passerelle.

Selon une autre caractéristique, le procédé d'ajout d'une passerelle comprend encore les étapes de : connexion de ladite passerelle au dit serveur intermédiaire d'échange de donnée et établissement d'une session, au moyen desdits paramètres de connexion, afin d'échanger des données.

Les données peuvent ainsi remonter depuis les capteurs jusqu'aux applications sans risquer une surcharge des passerelles ou serveurs intermédiaires d'échange déjà en place. Les données issues des capteurs sont donc encore collectées en temps réel. Les flux de données issues des capteurs et passerelles déjà en place ne sont donc pas perturbés.

Les risques de saturation du système en cas d'implantation d'un grand nombre de capteurs sont donc réduits.

En outre, l'installation d'une passerelle additionnelle et des capteurs associés peut être effectuée de manière très rapide et en nécessitant un minimum d'intervention de la part d'un agent. Le procédé est donc particulièrement avantageux dans le cadre d'une implantation de dizaines de milliers voire de millions de capteurs destinés à remonter vers des serveurs centraux d'application un volume important de données.

Un procédé de reprise suite à une interruption de connexion d'une passerelle dans un tel système d'instrumentation, comprend les étapes suivantes : demande, par ladite passerelle, d'affectation d'au moins un serveur intermédiaire d'échange de récupération, à ladite passerelle, affectation, par un serveur central d'application, d'au moins un serveur intermédiaire d'échange de récupération, à ladite passerelle, envoi, par ledit serveur central d'application, des paramètres de connexion au dit au moins un serveur intermédiaire d'échange de récupération, à ladite passerelle.

Le procédé de reprise suite à une interruption de connexion d'une passerelle peut être mis en oeuvre indépendamment de tout autre procédé décrit ci-dessus. Il peut notamment être mis en oeuvre indépendamment du procédé d'ajout d'une passerelle.

De manière préférée, selon une autre caractéristique, le procédé de reprise comprend encore les étapes de : connexion de ladite passerelle au dit au moins un serveur intermédiaire d'échange de récupération et établissement d'une session, au moyen desdits paramètres de connexion, transmission au dit au moins un serveur intermédiaire d'échange de récupération des données intermédiaires, stockées localement par ladite passerelle durant ladite interruption.

L'interruption de connexion d'une passerelle peut provenir d'une défaillance de la passerelle elle-même et/ou du serveur d'échange communiquant avec cette passerelle et/ou d'une interruption dans le réseau entre la passerelle et le serveur d'échange communiquant avec la passerelle.

La remontée des données non transmises en temps réel durant la période d'interruption peut donc s'effectuer à la reprise et sans perturber les flux des données qui continuent à être remontées en temps réel. La récupération des données ne porte donc pas préjudice aux données temps réel.

Un procédé de diagnostic d'une passerelle dans un tel un système d'instrumentation, comprenant les étapes suivantes : détermination, par un serveur central d'application, du besoin de réaliser un diagnostic d'une passerelle, affectation, par ledit serveur central d'application, d'un serveur intermédiaire d'échange de diagnostic, à ladite passerelle, envoi, par ledit serveur central d'application, des paramètres de connexion au dit serveur intermédiaire d'échange de diagnostic, à ladite passerelle, envoi, par ledit serveur central d'application, d'un ordre de diagnostic, à ladite passerelle.

Le procédé de diagnostic peut être mis en oeuvre indépendamment de tout autre procédé décrit ci-dessus. Il peut notamment être mis en oeuvre indépendamment du procédé d'ajout d'une passerelle et de reprise suite à une interruption.

Le procédé d'ajout d'une passerelle, le procédé de reprise suite à une interruption de connexion d'une passerelle et le procédé de diagnostic peuvent chacun être considéré comme un procédé d'utilisation du système d'instrumentation selon l'invention.

Préférentiellement, selon une autre caractéristique, le procédé de diagnostic comprend encore les étapes de : connexion de ladite passerelle au dit serveur intermédiaire d'échange de diagnostic et établissement d'une session, au moyen desdits paramètres de connexion, transmission au dit serveur intermédiaire d'échange de diagnostic des données de diagnostic.

La remontée des données de diagnostic ne perturbe donc pas les flux des données remontées en temps réel. On peut donc effectuer des diagnostics très complets nécessitant la remontée de très importants volumes de données sans que cela ne vienne pour autant perturber les applications collectant des données temps réel.

Dans tous les modes de réalisation, l'établissement des sessions de communication s'effectue avantageusement de manière dynamique. Ainsi, des canaux de communication entre passerelles et serveurs intermédiaires peuvent être crées en fonction des besoins du moment sans avoir à être prédéfinis au préalable. Ainsi, des canaux de communication peuvent être ouverts et fermés à la demande pour les besoins d'une tâche spécifique. Typiquement, une passerelle ne connaît lors de son installation (ajout d'une passerelle, reprise après interruption, diagnostic, etc.) qu'un seul serveur intermédiaire d'échange. En fonction des besoins, par exemple pour effectuer un diagnostic, pour assurer une reprise suite à une interruption ou pour assurer une meilleur répartition des flux de commande et de données, ce serveur intermédiaire d'échange peut attribuer à la passerelle au moins un autre serveur intermédiaire d'échange (typiquement en lui communiquant l'adresse de cet au moins un autre serveur intermédiaire d'échange). De préférence cette attribution s'effectue de manière dynamique, c'est-à-dire en fonction du besoin de l'instant.

### BREVE DESCRIPTION DES FIGURES

D'autres caractéristiques, détails et avantages de l'invention ressortiront plus clairement de la description détaillée donnée ci-après à titre indicatif en relation avec des dessins sur lesquels :
- la figure 1, déjà décrite, présente un système selon l'art antérieur,
- la figure 2 présente, comparativement, un mode de réalisation d'un système selon l'invention,
- la figure 3 présente un fonctionnement nominal pour un serveur intermédiaire d'échange de type commande,
- la figure 4 présente un fonctionnement nominal pour un serveur intermédiaire d'échange de type donné,
- la figure 5 illustre un procédé d'ajout d'une passerelle à un système,
- la figure 6 illustre un procédé de reprise suite à une interruption de liaison avec une passerelle,
- la figure 7 illustre un procédé de diagnostic d'une passerelle.

### DESCRIPTION DETAILLEE DE L'INVENTION

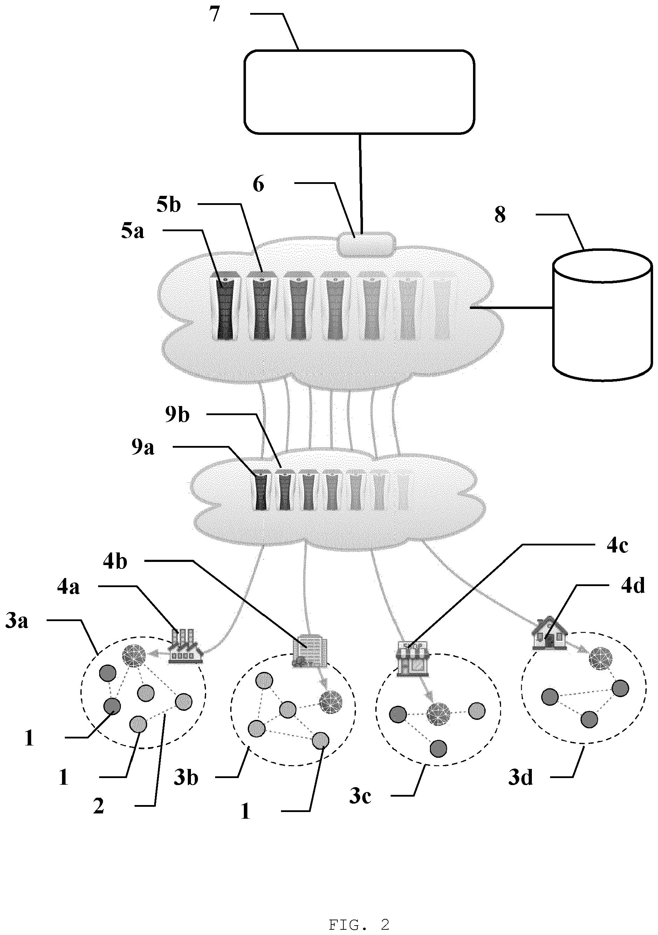

La figure 2 illustre un mode de réalisation d'un système selon l'invention. Le système d'instrumentation selon l'invention comprend les mêmes composants que le système selon l'art antérieur. Cependant, selon une caractéristique importante de l'invention, il comprend de plus au moins un serveur intermédiaire d'échange 9a, 9b, génériquement désigné 9. Ledit au moins un serveur intermédiaire d'échange 9 s'intercale dans tous les échanges d'information entre une passerelle 4 et un serveur central d'application 5, et prend ainsi une place centrale. Ceci est rendu possible par le fait qu'un tel serveur intermédiaire d'échange 9, fonctionne en tant que serveur. Tant les passerelles 4 que les serveurs centraux d'application 5 fonctionnent alors en tant que client et se connectent au dit serveur intermédiaire d'échange 9 et établissent des sessions de communication avec lui. Le serveur intermédiaire d'échange 9 peut alors assurer tous les échanges entre passerelle 4 et serveur central d'application 5.

Ceci est possible car un serveur central d'application 5 comprend un client apte à permettre au dit serveur central d'application 5 de se connecter et d'établir une session de communication avec ledit serveur intermédiaire d'échange 9.

De manière similaire une passerelle 4 comprend un client apte à permettre à ladite passerelle 4 de se connecter et d'établir une session de communication avec ledit serveur intermédiaire d'échange 9. Ainsi, la passerelle 4 peut initier d'elle-même l'ouverture d'une session de communication avec un serveur intermédiaire d'échange 9 pour faire remonter des données vers le serveur central d'application 5. De même le serveur central d'application 5 peut initier d'elle-même l'ouverture d'une session de communication avec un serveur intermédiaire d'échange 9. Les passerelles 4 et le serveur central d'application 5 peuvent ainsi créer des connexions persistantes vers le serveur intermédiaire d'échange 9.

Ledit au moins un serveur intermédiaire d'échange 9 occupe alors une position centrale dans les échanges entre passerelle 4 et serveur central d'application 5 lui permettant de réaliser des échanges d'informations entre passerelle 4 et serveur central d'application 5 ainsi connectés par son intermédiaire. Ceci lui permet avantageusement de contrôler, surveiller, superviser ces échanges.

Ceci permet encore de mettre en place des mécanismes de sécurisation de ces échanges. Ceci peut être réalisé par la mise en place d'un moyen d'authentification d'un client, passerelle 4 ou serveur central d'application 5, lors de sa connexion au serveur intermédiaire d'échange 9.

Ainsi, par exemple, l'identité des entités peut être validée au moyen d'un protocole de type Simple Authentication and Security Layer Protocol, SASL. De plus, les échanges peuvent être sécurisés, par exemple, au moyen d'un chiffrement de type Transport Layer Security, TLS.

Il est avantageusement possible de répartir la charge des échanges entre plusieurs serveurs intermédiaires d'échange 9, en les démultipliant autant que de besoin. Il est aussi possible de dédier certains serveurs intermédiaires d'échange 9 soit à une fonction : commande, données, reprise, diagnostic, etc, comme il est illustré dans la suite, soit à un type de capteur (température, pression, etc), soit encore à un ensemble géographique de capteurs ou à un ensemble fonctionnel de capteurs, soit à toute combinaison des cas précédents.

Lorsque le volume d'information échangé au travers d'un serveur intermédiaire d'échange 9 augmente, quelle qu'en soit la raison, il est aisé, au-delà d'une certaine charge, de décharger ledit serveur intermédiaire d'échange 9, sur deux serveurs intermédiaires d'échange 9, par exemple similaires.

L'utilisation d'au moins un tel serveur intermédiaire d'échange 9 dans un système d'instrumentation nécessite, relativement à l'art antérieur, une nécessaire modification tant des serveurs centraux d'application 5, que des passerelles 4, qui doivent adapter leurs modes de fonctionnement pour y intégrer les serveurs intermédiaires d'échange 9.

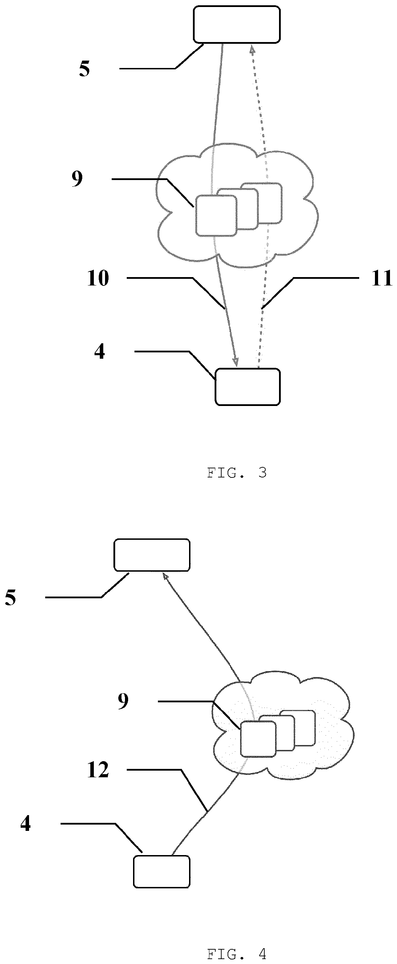

Tous les échanges entre une passerelle 4 et un serveur central d'application 5 sont ainsi, selon l'invention, réalisés au travers d'un serveur intermédiaire d'échange 9. Deux exemples d'utilisation nominale, sont décrits en référence aux figures 3 et 4.

Les capteurs 3, par le biais de la passerelle 4 sont ainsi en mesure d'envoyer de leur propre initiative des mesures ainsi que des alarmes au serveur central d'application 5. Le serveur central d'application 5 stocke de manière centralisée ou distribuée les données issues des capteurs 1 dans une mémoire 8.

Avantageusement, le serveur central d'application 5 est configuré pour prendre des décisions sur la base des données remontées par les capteurs 1. Cette prise de décision concerne par exemple la génération d'une commande de pilotage d'un appareil, tel que par exemple un appareil dont l'action peut être mesurée par les capteurs 1. Cette commande peut également concerner le fonctionnement des capteurs 1 eux-mêmes ou des passerelles 4 elles-mêmes. Par exemple, suite à la réception de données de mesure issues d'une passerelle 4, le serveur central d'application 5 peut demander à cette passerelle 4 de faire remontée des données de mesure à une fréquence plus élevée. Cette prise de décision automatique éventuellement accompagnée de la définition et de l'envoi d'une commande ne nécessite donc par l'intervention d'un utilisateur ou d'un opérateur. Ainsi, le serveur central d'application 5 héberge des processus métier.

La figure 3 illustre un échange de type « commande » entre un serveur central d'application 5 et une passerelle 4. Les échanges de type commande sont typiquement utilisés pour transmettre une commande de configuration, ou d'interrogation à un capteur 1 ou à une passerelle 4. Un serveur intermédiaire d'échange 9 est utilisé. Tant le serveur central d'application 5 que la passerelle 4 se sont préalablement connectés avec ledit serveur intermédiaire d'échange 9 et ont établi chacun une session de communication, afin de pouvoir échanger des informations. Une commande est typiquement initiée par un serveur central d'application 5 qui envoie une commande 10. Cette commande 10 est envoyée par le serveur central d'application 5 au serveur intermédiaire d'échange 9. Le serveur intermédiaire d'échange 9 transmet cette commande 10 à la passerelle 4. La passerelle 4 effectue le cas échéant une action correspondant à la commande 10 demandée. La passerelle 4 prépare ensuite une réponse 11 correspondant à ladite commande 10. Cette réponse 11 est envoyée par la passerelle 4 au serveur intermédiaire d'échange 9. Le serveur intermédiaire d'échange 9 transmet cette réponse 11 au serveur central d'application 5.

Un message « commande » 10 est par exemple de la forme :
- Passerelle cible : Identifiant_unique_de_la_passerelle,
- Identifiant de la commande : Commande_001,
- Commande : « Lister les capteurs présents ».

Un message « réponse » 11 est par exemple de la forme :
- Passerelle cible : Identifiant_unique_de_la_passerelle,
- Identifiant de la commande : Commande_001,
- Réponse : { Capteur de température 0001 ; Capteur de consommation 0008 }.

La figure 4 illustre un échange de type « donnée » entre un serveur central d'application 5 et une passerelle 4. Les échanges de type donnée sont typiquement utilisés pour transmettre au moins une donnée, par exemple issue d'un capteur 1, à un serveur central d'application 5. Un serveur intermédiaire d'échange 9 est utilisé. Tant le serveur central d'application 5 que la passerelle 4 se sont préalablement connectés avec ledit serveur intermédiaire d'échange 9 et ont établi chacun une session de communication, afin de pouvoir échanger des informations. Une donnée est typiquement transmise par une passerelle 4 au moyen d'un message 12. Ce message 12 est envoyé par la passerelle 4 au serveur intermédiaire d'échange 9. Le serveur intermédiaire d'échange 9 transmet ce message 12 au serveur central d'application 5.

Un message « donnée » 12 est par exemple de la forme :
- Passerelle source : Identifiant_unique_de_la_passerelle,
- Capteur : Identifiant_unique_du_capteur,
- Point de mesure : Identifiant_du_point_de_mesure,
- Valeur : Valeur_mesurée.

Le message 12 est transmis selon des caractéristiques (récurence, etc) préalablement définies. Cette définition préalable peut être prédéfinie et connue de la passerelle 4, ou définie par un serveur central d'application 5 et transmis à ladite passerelle 4 au moyen d'une commande 10, 11.

Au minimum un serveur intermédiaire d'échange 9 de type donnée est utilisé pour une passerelle 4 donnée. Un serveur intermédiaire d'échange 9 de type commande est optionnel. En l'absence de serveur intermédiaire d'échange 9 de type commande, toutes les caractéristiques des messages 12 de donnée doivent être prédéfinies. Alternativement, en l'absence de serveur intermédiaire d'échange 9 de type commande associé à une passerelle 4, il est possible d'employer un serveur intermédiaire d'échange 9 de type commande global accessible à toutes les passerelles 4. Il est encore possible d'utiliser un serveur intermédiaire d'échange 9 de type donnée associé à ladite passerelle 4 pour, de préférence occasionnellement, transmettre une commande 10 et le cas échéant, sa réponse 11.

Il convient de noter, à cet effet, que rien ne distingue structurellement un serveur intermédiaire d'échange 9 de type donnée d'un serveur intermédiaire d'échange 9 de type commande, ou d'autres types décrits plus loin. Seule son éventuelle affectation distingue fonctionnellement un serveur intermédiaire d'échange 9.

L'utilisation d'au moins un tel serveur intermédiaire d'échange 9 dans un système d'instrumentation permet et/ou nécessite de plus des procédés particuliers. Trois procédés particuliers sont présentés ici à titre d'illustration des avantages des serveurs intermédiaires d'échange 9.

Avant de pouvoir utiliser une passerelle 4 dans un système, il convient de la déclarer, d'en définir les paramètres, et d'informer les différents serveurs centraux d'application 5 du système de son existence. Il convient encore, le cas échéant de lui allouer/affecter un ou plusieurs serveurs intermédiaires d'échange 9, pour qu'elle puisse fonctionner dans le système en échangeant des informations.

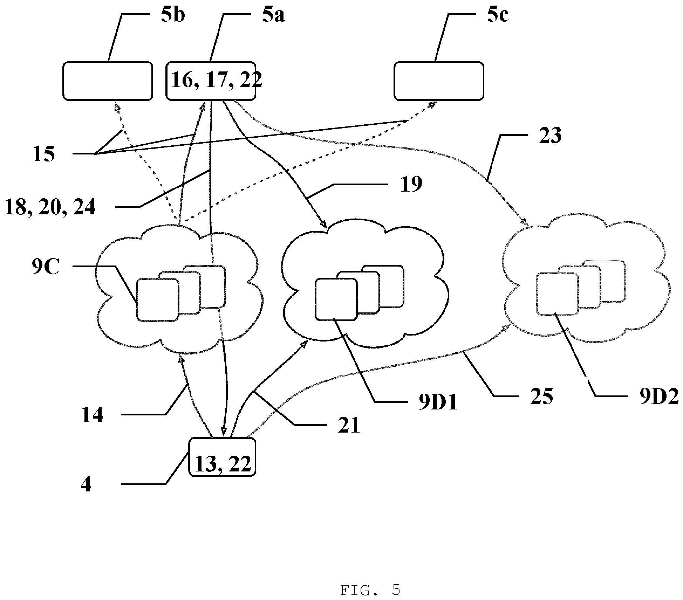

En référence à la figure 5, ceci peut être réalisé au moyen d'un procédé d'ajout d'une passerelle 4. Un tel procédé d'ajout de passerelle 4 dans un système d'instrumentation comprend typiquement les étapes suivantes.

Une première étape est une création 13, par ladite passerelle 4, d'un identifiant unique de passerelle. Cet identifiant permet de distinguer de manière unique ladite passerelle 4 au sein du système. Cet identifiant peut être crée par la passerelle 4 elle-même. Une autre solution est d'utiliser un serveur d'identifiant. Si il est souhaité de réaliser une authentification lors des connexions, la création dudit identifiant peut encore être assortie de la création d'un code secret associé, tel un mot de passe. Une fois munie dudit identifiant, et le cas échéant du code secret, la passerelle 4, selon une deuxième étape, se connecte 14 au système, via le réseau de communication. Tous les échanges des passerelles 4 doivent transiter par un serveur intermédiaire d'échange 9. Aussi, la connexion 14 est réalisée auprès d'un serveur intermédiaire d'échange 9. Ce dernier est par exemple un serveur intermédiaire d'échange dédié 9C à la fonction d'ajout de passerelle. **Le fait d'être dédié permet à ses paramètres de connexion d'être prédéfinis et ainsi d'être connus de toutes les passerelles 4, ab initio.** La passerelle 4, se connecte ainsi et poursuit, selon une troisième étape, en demandant une création d'un compte passerelle, en relation avec ledit identifiant.

Au cours d'une quatrième étape, un compte passerelle associé à ladite passerelle 4, est créé. La création peut être réalisée par un serveur central d'application 5, par le serveur intermédiaire d'échange dédié 9C, ou par tout autre composant du système relié par le réseau de communication.

Une fois ce compte passerelle créé, il convient d'informer de cette création, les utilisateurs potentiels. Pour cela, au cours d'une cinquième étape, une notification 15 de ladite création de compte passerelle est envoyé à certains ou à tous les serveurs centraux d'application 5.

Une étape optionnelle de validation 16 peut ici être intercalée. La validation vérifie les conditions de création d'un compte passerelle. Elle comprend par exemple la vérification que l'identifiant de passerelle produit est bien unique, au moins au sein du système, que l'adresse de la passerelle 4 est correcte, etc.

Une autre étape optionnelle de création 17 d'une entrée peut ici être intercalée. Cette entrée, correspondant au compte passerelle est avantageusement stockée dans une base de donnée d'inventaire des passerelles 4 du système. Cette base peut être maintenue par chaque serveur central d'application 5 qui maintient sa propre base de données d'inventaire ou de manière centrale par un composant du système, qui maintient une unique base de données d'inventaire pour le système, interrogeable par les autres composants du système, via le réseau de communication.

Comme vu précédemment, une passerelle 4, pour pouvoir fonctionner avec le système et donc réaliser des échanges, nécessite de se voir affecter au moins un serveur intermédiaire d'échange 9 pour les données et, avantageusement, au moins un serveur intermédiaire d'échange 9 pour les commandes.

Une telle affectation, pour les commandes, peut être réalisée par les étapes suivantes.

Un serveur central d'application 5, suite à la création du compte passerelle, affecte un serveur intermédiaire d'échange 9C de commande, à ladite passerelle 4. Cette affectation est réalisée en fonction des besoins envisagés pour ladite passerelle 4. En fonction des volumes échangés, il est possible de confondre ce serveur intermédiaire d'échange de commande 9C affecté avec le serveur intermédiaire d'échange de commande prédéfini. Ceci correspond au cas où les volumes d'échange de commande sont faibles et où un unique serveur intermédiaire d'échange de commande 9C peut servir plusieurs ou toutes les passerelles 4. Au contraire, lorsque les volumes d'échange de commande d'une passerelle 4 sont élevés, il est possible d'affecter un serveur intermédiaire d'échange de commande 9C uniquement à cette passerelle 4. Toute configuration intermédiaire, avec un serveur intermédiaire d'échange de commande 9C pour un ensemble de passerelles 4, est possible. Avantageusement, cette étape de sélection de la passerelle à affecter est effectuée de manière dynamique, lors de l'ajout de la passerelle 4. Elle peut notamment prendre en compte en temps réel des critères de répartition de charge.

A l'issue de l'étape d'affectation, le serveur central d'application 5 se connecte au dit serveur intermédiaire d'échange de commande 9C et établit avec lui une session.

Après l'étape d'affectation, une étape 18 envoie des paramètres de connexion au dit serveur intermédiaire d'échange de commande affecté, à ladite passerelle 4. Cette étape est avantageusement réalisée par un serveur central d'application 5, par exemple celui ayant réalisé l'étape d'affectation. Cet envoi 18 transite avantageusement via un serveur intermédiaire d'échange de type commande 9C.

Muni de et au moyen de ces paramètres de connexion, la passerelle 4 se connecte au dit serveur intermédiaire d'échange de commande 9C affecté et établit avec lui une session, afin de pouvoir échanger des commandes.

De manière similaire pour les données, une passerelle 4 nécessite de se voir affecter au moins un premier serveur intermédiaire d'échange 9D1 pour les données.

Une telle affectation 19, pour les données, peut être réalisée par les étapes suivantes. Un serveur central d'application 5, suite à la création du compte passerelle, affecte 19 un premier serveur intermédiaire d'échange de donnée 9D1, à ladite passerelle 4. Cette affectation est réalisée en fonction des besoins envisagés pour ladite passerelle 4. Pour le cas où les volumes d'échange de données sont faibles, un unique serveur intermédiaire d'échange de donnée 9D1 peut servir plusieurs ou même toutes les passerelles. Au contraire, lorsque les volumes d'échange de donnée d'une passerelle 4 sont élevés, il est possible d'affecter un premier serveur intermédiaire d'échange de donnée 9D1 à un nombre plus réduit de passerelles. A l'extrême un serveur intermédiaire d'échange de donnée 9D1 peut ne servir qu'une unique passerelle 4. Toute configuration intermédiaire, avec un serveur intermédiaire d'échange de donnée 9D1 pour un ensemble de passerelles 4, est possible.

A l'issue de l'étape d'affectation 19, le serveur central d'application 5 se connecte au dit premier serveur intermédiaire d'échange de donnée 9D1 et établit avec lui une session.

Après l'étape d'affectation 19, une étape 20 envoie des paramètres de connexion au dit premier serveur intermédiaire d'échange de donnée 9D1 affecté, à ladite passerelle 4. Cette étape est avantageusement réalisée par un serveur central d'application 5, par exemple celui ayant réalisé l'étape d'affectation 19. Cet envoi 20 transite avantageusement via un serveur intermédiaire d'échange de type commande 9C.

Muni de et au moyen de ces paramètres de connexion, la passerelle 4 se connecte 21 au dit premier serveur intermédiaire d'échange de donnée 9D1 affecté et établit avec lui une session, afin de pouvoir échanger des données.

Les volumes de données sont typiquement plus importants que les volumes de commande. Il est ainsi courant qu'un unique serveur intermédiaire d'échange de commande 9C soit à même de répondre aux besoins d'une ou plusieurs passerelles 4. Au contraire, il est possible qu'une passerelle 4 ait besoin de plusieurs serveurs intermédiaires d'échange de donnée 9D1, 9D2.

Un premier serveur intermédiaire d'échange de donnée 9D1 étant nécessaire, son affectation peut être systématiquement réalisée dès l'ajout de la passerelle 4. L'affectation d'un deuxième serveur intermédiaire d'échange de donnée 9D2 ou d'un serveur intermédiaire d'échange de donnée supplémentaire doit être réalisée en tant que de besoin.

Une telle affectation 23 deuxième ou supplémentaire, pour les données, peut être réalisée par les étapes suivantes. Une étape additionnelle de demande 22 d'affectation d'un serveur intermédiaire d'échange de données supplémentaires 9D2, à la passerelle 4, est ici nécessaire. Elle émane du composant qui détecte que les volumes de données échangés sont plus importants que prévu. Ce peut être un serveur central d'application 5 ou une passerelle 4. La suite est similaire à la première affectation 19. Un serveur central d'application 5, suite à cette demande 22, affecte 23 un serveur intermédiaire d'échange de donnée 9D2 supplémentaire, à ladite passerelle 4.

A l'issue de l'étape d'affectation 23, le serveur central d'application 5 se connecte au dit serveur intermédiaire d'échange de donnée 9D2 supplémentaire et établit avec lui une session.

Après l'étape d'affectation 23, une étape envoie 24 des paramètres de connexion au dit serveur intermédiaire d'échange de donnée 9D2 supplémentaire affecté, à ladite passerelle 4. Cette étape est avantageusement réalisée par un serveur central d'application 5, par exemple celui ayant réalisé l'étape d'affectation 23. Cet envoi 24 transite avantageusement via un serveur intermédiaire d'échange de type commande 9C.

Muni de et au moyen de ces paramètres de connexion, la passerelle 4 se connecte 25 au dit serveur intermédiaire d'échange de donnée 9D2 supplémentaire affecté et établit avec lui une session, afin de pouvoir échanger des commandes.

Un tel mode opératoire permet d'adapter dynamiquement les affectations des serveurs intermédiaires d'échange 9 en fonction de l'évolution des besoins en volume d'échange. Ceci permet encore de répartir les différents échanges de manière cloisonnée sur des serveurs intermédiaires d'échange 9 indépendants afin d'éviter des perturbations mutuelles.

Ceci permet encore au système global de présenter une bonne capacité de passage à l'échelle, l'ajout d'une passerelle 4 et/ou une augmentation d'un volume d'échange pouvant être pris en compte sans perturber les passerelles 4 et les serveurs intermédiaires d'échange 9 déjà en place.

Selon une variante du mode de réalisation précédemment décrit, la passerelle se voit affecter au moins un serveur intermédiaire d'échange assurant à la fois les flux de commande et les flux de données.

Un autre procédé pouvant avantageusement être mis en oeuvre de par la présence de serveurs intermédiaires d'échange 9 concerne le traitement des échanges lors d'une reprise de connexion, suite à une interruption de connexion d'une passerelle 4.

L'hypothèse est qu'une liaison entre une passerelle 4 et le système a subi une interruption. Durant le temps où la passerelle 4 est autonome et n'était plus reliée au système, la passerelle 4 a stocké localement toutes les données qu'elle était supposée transmettre au serveur central d'application 5. Lorsque la liaison peut à nouveau être établie, la passerelle 4 reprend un fonctionnement similaire à celui antérieur à l'interruption.

La passerelle 4 est toujours connue du système et il n'est pas nécessaire de recommencer le procédé d'ajout. Seule une reconnexion aux serveurs intermédiaires d'échange 9 précédemment affectés, ayant subi l'interruption, est nécessaire.

Cependant ces serveurs intermédiaires d'échange 9 sont dimensionnés pour des volumes d'échange correspondant au « régime établi » des données issues en (quasi) temps réel des mesures capteurs.

Plusieurs options sont ouvertes pour la transmission de rapatriement des données intermédiaires qui ont été localement stockées par la passerelle 4 pendant la durée de l'interruption de la connexion.

Une première option triviale est de supprimer ces données intermédiaires et de ne transmettre à la reprise que les nouvelles données.

Une autre option est de transmettre les données intermédiaires via les serveurs intermédiaires d'échange 9 précédemment affectés. Cependant quelle que soit la méthode envisagée, un risque important de perturbation ou d'encombrement existe du fait du volume supplémentaire, potentiellement important, occasionné par ce « régime transitoire ». Un tel risque s'accompagne alors d'un risque de perturbation préjudiciable de la transmission des données de régime établi.

Un procédé de reprise selon l'invention propose de séparer le régime établi sur le ou les serveurs intermédiaires d'échange 9 précédemment affectés pour ce régime établi, et donc dimensionnés pour, et d'affecter au moins un nouveau serveur intermédiaire d'échange de récupération 9R, dédié à la transmission des données intermédiaires du régime transitoire.

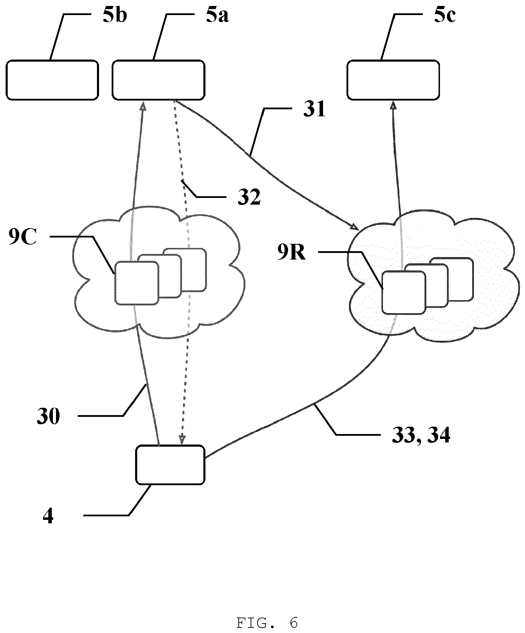

En référence à la figure 6, un tel procédé comprend typiquement les étapes suivantes. Une première étape est une demande 30, par exemple issue de la passerelle 4, dès après sa reconnexion, d'affectation d'au moins un serveur intermédiaire d'échange de récupération 9R, à ladite passerelle 4. Cette demande 30 transite avantageusement via un serveur intermédiaire d'échange de type commande 9C. A cette demande 30, par exemple un serveur central d'application 5 répond par une étape d'affectation 31 d'au moins un serveur intermédiaire d'échange de récupération 9R, à ladite passerelle 4. En suivant, ledit serveur central d'application 5, au cours d'une étape 32, envoie des paramètres de connexion au dit au moins un serveur intermédiaire d'échange de récupération 9R, à ladite passerelle 4. Cet envoi 32 transite avantageusement via un serveur intermédiaire d'échange de type commande 9C.

A l'issue de l'étape d'affectation 31, le serveur central d'application 5 se connecte au dit au moins un serveur intermédiaire d'échange de récupération 9R et établit avec lui/eux une session.

Le procédé de reprise peut se poursuivre par une étape de connexion 33 de la passerelle 4 au dit au moins un serveur intermédiaire d'échange de récupération 9R et d'établissement d'une session, au moyen desdits paramètres de connexion. Une fois cette connexion 33 établie, une étape de transmission 34 au dit au moins un serveur intermédiaire d'échange de récupération 9R des données intermédiaires peut débuter. Afin de traiter le rattrapage du « retard » accumulé par les données intermédiaires durant l'interruption, il peut avantageusement être adopté un débit de transmission plus important que celui utilisé en régime établi. Cependant la séparation entre les données temps réel et les données intermédiaires, grâce à l'utilisation de serveurs intermédiaires d'échange 9 distincts, garantit que les deux processus ne risquent pas de se perturber mutuellement.

Un autre procédé qui peut avantageusement être mis en oeuvre de par la présence de serveurs intermédiaires d'échange 9 concerne le traitement de diagnostic d'une passerelle 4. De manière plus générale, ceci correspond à une fonction particulière, ici le diagnostic d'une passerelle 4, occasionnant en lieu et place ou en parallèle d'une transmission en régime établi, une transmission supplémentaire limitée dans le temps. Selon l'invention, au moins un serveur intermédiaire d'échange 9 additionnel est affecté à la transmission supplémentaire, en tant que de besoin.

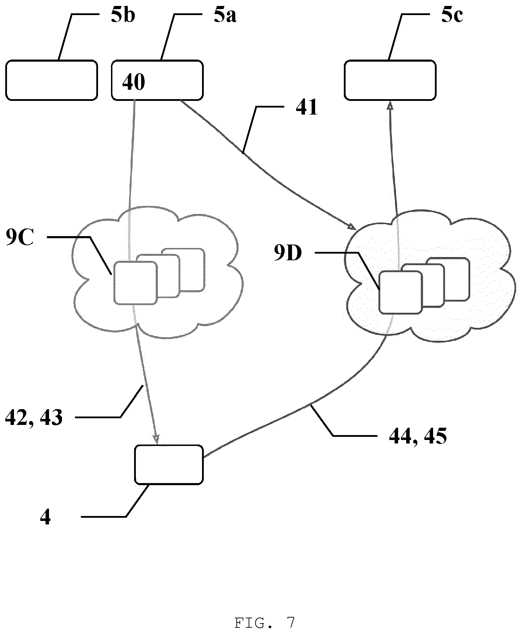

Ainsi, tel qu'illustré à la figure 7, un procédé de diagnostic d'une passerelle 4 peut comprendre les étapes suivantes. Au cours d'une première étape, un composant du système, tel par exemple un serveur central d'application 5, détermine 40 un besoin de réaliser un diagnostic pour une passerelle 4. Dans une deuxième étape, ledit composant affecte 41 un serveur intermédiaire d'échange 9D pour cette fonction de diagnostic, à ladite passerelle 4.

A l'issue de l'étape d'affectation 41, le serveur central d'application 5 se connecte au dit serveur intermédiaire d'échange de diagnostic 9D et établit avec lui une session.

Dans une quatrième étape, ledit serveur central d'application 5 envoie 42 des paramètres de connexion au dit serveur intermédiaire d'échange de diagnostic 9D, à ladite passerelle 4, et envoie 43 un ordre de diagnostic, à ladite passerelle 4. Ces envois 42, 43, transitent avantageusement via un serveur intermédiaire d'échange de type commande 9C.

Ensuite, ladite passerelle 4 réalise une étape de connexion 44 au dit serveur intermédiaire d'échange de diagnostic 9D et établit une session, au moyen desdits paramètres de connexion. Une étape de transmission 45 au dit serveur intermédiaire d'échange de diagnostic 9D des données de diagnostic par la passerelle 4, peut ensuite débuter. Ces données de diagnostic sont transmises au serveur central d'application 5 par ledit serveur intermédiaire d'échange de diagnostic 9D.

Un des enseignements importants selon l'invention est l'utilisation de serveurs intermédiaires d'échange 9 afin de séparer les différents processus d'échange. Ceci permet d'une part de cloisonner les différents échanges afin d'éviter tout risque de perturbation mutuelle et d'autre part d'adapter toute variation du volume d'échange en adaptant le nombre des serveurs intermédiaires d'échange 9 sans remettre en cause les échanges déjà établis. Les différents modes de réalisation décrits ne sont que des exemples d'utilisation de cet enseignement.

Bien qu'il soit décrit dans la présente des modes de réalisation préférés de l'invention, il doit être bien compris que l'invention n'est pas limitée à ces modes, et que des variations peuvent être apportées à l'intérieur de la portée des revendications suivantes.

## Revendications

1. Système d'instrumentation comprenant au moins un ensemble (3) de capteurs (1), au moins une passerelle (4), au moins un serveur central d'application (5), et un réseau de communication internet, ladite au moins une passerelle (4) étant reliée au dit réseau de communication internet, chaque capteur (1) d'un ensemble (3) étant interfacé au dit réseau de communication internet via une passerelle (4), ledit au moins un serveur central d'application (5) étant relié au dit réseau de communication internet, le système comprend encore une pluralité de serveurs intermédiaires d'échange (9),
pour lequel un serveur central d'application (5) comprend un client apte à permettre au dit serveur central d'application (5) de se connecter et d'initier une session de communication avec au moins un des serveurs intermédiaire d'échange (9) ;
pour lequel ladite au moins une passerelle (4) comprend un client apte à permettre à ladite au moins une passerelle (4) de se connecter et d'initier au moins une session de communication avec l'un au moins desdits serveurs intermédiaire d'échange (9) ;
le système étant configuré de manière à ce que tous les échanges entre le serveur central d'application (5) et ladite au moins une passerelle (4) s'effectuent par l'intermédiaire du serveur intermédiaire d'échange (5) ;
et dans lequel ladite au moins passerelle (4) est configurée de manière à: recevoir d'au moins un capteur (1) des données de mesure, se connecter au réseau de communication internet et initier au moins une session de communication avec au moins un serveur intermédiaire d'échange (9), transmettre au serveur intermédiaire d'échange (9) un message comprenant un identifiant de passerelle, au moins un identifiant de capteur et au moins certaines desdites données de mesure,
**caractérisé en ce que** dans le système le serveur intermédiaire d'échange (9) est configuré pour transmettre ledit message au serveur central d'application (5),
le système étant en outre configuré de manière à effectuer les étapes suivantes:
- demande (22), par un serveur central d'application (5) ou par une passerelle (4), d'affectation d'un serveur intermédiaire d'échange de donnée supplémentaire (9D2), à ladite passerelle (4),
- affectation (23), par un serveur central d'application (5), d'un serveur intermédiaire d'échange de donnée supplémentaire (9D2), à ladite passerelle (4)
- envoi (24), par ledit serveur central d'application (5), des paramètres de connexion au dit serveur intermédiaire d'échange de donnée supplémentaire (9D2), à ladite passerelle (4).

2. Système d'instrumentation selon la revendication 1, dans lequel le serveur intermédiaire d'échange (9) est configuré pour : recevoir du serveur central d'application (5) un message de commande (10) comprenant un identifiant de passerelle, un identifiant de commande et une commande ; transmettre ce message de commande à la passerelle (4) ayant un identifiant correspondant à l'identifiant de passerelle indiqué dans le message de commande (10) ; recevoir de la passerelle (4) un message de réponse (11) comprenant l'identifiant de la passerelle, l'identifiant de commande et des données de réponse ; transmettre le message de réponse (11) au serveur central d'application (5).

3. Procédé d'utilisation d'un système d'instrumentation, **caractérisé en ce qu'**il utilise un système d'instrumentation selon la revendication 1 et **en ce qu'**il comprend l'ajout d'une passerelle, l'ajout d'une passerelle comprenant les étapes suivantes :
- création (13), par ladite passerelle (4), d'un identifiant unique de passerelle, optionnellement assorti d'un code secret,
- connexion (14) de ladite passerelle (4) à un serveur intermédiaire d'échange dédié (9C) à l'ajout de passerelle, et demande de création d'un compte passerelle, en relation avec ledit identifiant, l'étape de connexion étant effectuée par ladite passerelle (4),
- création d'un compte passerelle associé à ladite passerelle (4),
- notification (15) au dit au moins un serveur central d'application (5) de ladite création de compte passerelle,
le procédé comprenant en outre les étapes suivantes :
- demande (22), par un serveur central d'application (5) ou par une passerelle (4), d'affectation d'un serveur intermédiaire d'échange de donnée supplémentaire (9D2), à ladite passerelle (4),
- affectation (23), par un serveur central d'application (5), d'un serveur intermédiaire d'échange de donnée supplémentaire (9D2), à ladite passerelle (4)
- envoi (24), par ledit serveur central d'application (5), des paramètres de connexion au dit serveur intermédiaire d'échange de donnée supplémentaire (9D2), à ladite passerelle (4).

4. Procédé selon la revendication précédente, comprenant encore une étape de :
- validation (16) dudit compte passerelle.

5. Procédé selon la revendication 3 ou 4, comprenant encore une étape de :
- création (17), par un serveur central d'application (5), d'une nouvelle entrée correspondant à ladite passerelle (4) dans une base de données d'inventaire.

6. Procédé selon l'une quelconque des revendications 3 à 5, comprenant encore les étapes de :
- affectation, par un serveur central d'application (5), d'un serveur intermédiaire d'échange de commande (9C), à ladite passerelle (4),
- envoi (18), par ledit serveur central d'application (5), des paramètres de connexion au dit serveur intermédiaire d'échange de commande (9C), à ladite passerelle (4),
- connexion de ladite passerelle (4) au dit serveur intermédiaire d'échange de commande (9C) et établissement d'une session, au moyen desdits paramètres de connexion, afin d'échanger des commandes.

7. Procédé selon l'une quelconque des revendications 3 à 6, comprenant encore les étapes de :
- affectation (19), par un serveur central d'application (5), d'un premier serveur intermédiaire d'échange de donnée (9D1), à ladite passerelle (4),
- envoi (20), par ledit serveur central d'application (5), des paramètres de connexion au dit premier serveur intermédiaire d'échange de donnée (9D1), à ladite passerelle (4).

8. Procédé selon l'une quelconque des revendications précédentes, comprenant encore les étapes de :
- connexion (21, 25) de ladite passerelle (4) au dit serveur intermédiaire d'échange de donnée (9D1, 9D2) et établissement d'une session, au moyen desdits paramètres de connexion, afin d'échanger des données.

9. Procédé selon l'une quelconque des revendications 3 à 8, comprenant encore une étape d'interfaçage d'une pluralité de capteurs avec ladite passerelle (4), les capteurs des différentes passerelles du système d'instrumentation étant configurés pour utiliser des protocoles différents.

10. Procédé selon l'une quelconque des revendications 6 à 8, dans lequel l'étape d'affectation s'effectue de manière dynamique.

11. Procédé selon l'une quelconque des revendications 3 à 10 comprenant une reprise de communication suite à une interruption de connexion d'une passerelle (4), la reprise comprenant les étapes suivantes :
- demande (30), par la passerelle (4) dont la connexion a été interrompue, d'affectation d'au moins un serveur intermédiaire d'échange de récupération (9R), à ladite passerelle (4) dont la connexion a été interrompue,
- affectation (31), par un serveur central d'application (5), d'au moins un serveur intermédiaire d'échange de récupération (9R), à ladite passerelle (4) dont la connexion a été interrompue,
- envoi (32), par ledit serveur central d'application (5), des paramètres de connexion au dit au moins un serveur intermédiaire d'échange de récupération (9R), à ladite passerelle (4) dont la connexion a été interrompue,
- connexion (33) de ladite passerelle (4) dont la connexion a été interrompue au dit au moins un serveur intermédiaire d'échange de récupération (9R) et établissement d'une session, au moyen desdits paramètres de connexion,
- transmission (34) au dit au moins un serveur intermédiaire d'échange de récupération (9R) des données intermédiaires, stockées localement durant ladite interruption par ladite passerelle (4) dont la connexion a été interrompue.

12. Procédé selon l'une quelconque des revendications 3 à 11 comprenant un diagnostic d'une passerelle, le diagnostic comprenant les étapes suivantes :
- détermination (40), par un serveur central d'application (5), du besoin de réaliser un diagnostic d'une passerelle (4),
- affectation (41), par ledit serveur central d'application (5), d'un serveur intermédiaire d'échange de diagnostic (9D), à ladite passerelle (4) à diagnostiquer,
- envoi (42), par ledit serveur central d'application (5), des paramètres de connexion au dit serveur intermédiaire d'échange de diagnostic (9D), à ladite passerelle (4) à diagnostiquer,
- envoi (43), par ledit serveur central d'application (5), d'un ordre de diagnostic, à ladite passerelle (4) à diagnostiquer,
- connexion (44) de ladite passerelle (4) à diagnostiquer au dit serveur intermédiaire d'échange de diagnostic (9D) et établissement d'une session, au moyen desdits paramètres de connexion,
- transmission (45) au dit serveur intermédiaire d'échange de diagnostic (9D) des données de diagnostic.

13. Procédé selon la revendication précédente, portant sur le diagnostic de la fiabilité de la passerelle à diagnostiquer et comprenant une étape de collecte de toutes les informations transmises et/ou reçues par cette passerelle à diagnostiquer ou portant sur le diagnostic de la fiabilité d'un capteur et comprenant une étape de collecte et d'analyse de la fréquence des données transmises par ce capteur.

## Patentansprüche

1. Instrumentierungssystem, mit mindestens einer Baugruppe (3) aus Sensoren (1), mindestens einem Gateway (4), mindestens einen zentralen Anwendungsserver (5) und einem Internet-Kommunikationsnetz, dieser mindestens eine Gateway (4) ist dabei mit dem genannten Internet-Kommunikationsnetz verbunden, jeder Sensor (1) einer Baugruppe (3) ist über ein Gateway (4) mit dem genannten Internet-Kommunikationsnetz verbunden, der genannte mindestens eine zentrale Anwendungsserver (5) ist mit dem genannten Internet-Kommunikationsnetz verbunden.
das System enthält außerdem mehrere zwischengeschalteten Vermittlungsserver (9), für die der zentrale Anwendungsserver (5) einen Client enthält, der dazu eingerichtet ist, dem zentralen Anwendungsserver (5) die Verbindung zu ermöglichen und eine Kommunikationssitzung mit mindestens einem der zwischengeschalteten Vermittlungsserver (9) zu initiieren;
für die der mindestens eine Gateway (4) einen Client umfasst, der dazu eingerichtet ist, diesem mindestens einen Gateway (4) die Verbindung zu ermöglichen und mindestens eine Kommunikationssitzung mit mindestens einem der zwischengeschalteten Vermittlungsserver (9) zu initiieren;
das System ist dabei dazu konfiguriert, dass jeder Austausch zwischen dem zentralen Anwendungsserver (5) und dem mindestens einen Gateway (4) über den zwischengeschalteten Vermittlungsserver (5) erfolgt;
und bei dem dieser mindestens eine Gateway (4) dazu konfiguriert ist, von mindestens einem Sensor (1) Messdaten zu empfangen, sich mit dem Internet-Kommunikationsnetz zu verbinden und mindestens eine Kommunikationssitzung mit mindestens einem zwischengeschalteten Vermittlungsserver (9) zu initiieren; an den zwischengeschalteten Vermittlungsserver (9) eine Meldung mit einer Gateway-Kennung, mindestens eine Sensorkennung und mindestens einige dieser Messdaten zu übermitteln,
**dadurch gekennzeichnet, dass** im System der zwischengeschaltete Vermittlungsserver (9) dazu konfiguriert ist, diese Meldung an den zentralen Anwendungsserver (5) zu senden,
das System ist dabei außerdem so konfiguriert ist, dass es die folgenden Schritte ausführt:
- Anforderung (22), über einen zentralen Anwendungsserver (5) oder über einen Gateway (4), der Zuweisung eines zusätzlichen zwischengeschalteten Datenaustauschservers (9D2) zu dem genannten Gateway (4),
- Zuweisung (23), über einen zentralen Anwendungsserver (5) eines zusätzlichen zwischengeschalteten Datenaustauschservers (9D2) zu dem genannten Gateway (4)
- Versand (24), durch den zentralen Anwendungsserver (5), der Verbindungsparameter mit dem genannten zusätzlichen zwischengeschalteten Datenaustauschserver (9D2) an diesen Gateway (4).

2. Instrumentierungssystem gemäß Anspruch 1, bei dem der zwischengeschaltete Vermittlungsserver (9) konfiguriert ist zum: Empfang vom zentralen Anwendungsserver (5) einer Befehlsmeldung (10) mit einer Gateway-Kennung, einer Befehlskennung und eines Befehls; Übermitteln dieser Befehlsmeldung an den Gateway (4) mit der Kennung, die der Gateway-Kennung entspricht, die in der Befehlsmeldung (10) angegeben ist; Empfang vom Gateway (4) einer Antwortmeldung (11), mit der Kennung des Gateway, der Befehlskennung und der Antwortdaten; Übermittlung der Antwortmeldung (11) an den zentralen Anwendungsserver (5).

3. Verfahren zum Einsatz eines Instrumentierungssystems, **dadurch gekennzeichnet, dass** es ein Instrumentierungssystem gemäß Anspruch 1 einsetzt und zusätzlich einen Gateway enthält, das Hinzufügen des Gateway umfasst die folgenden Schritte:
- Erzeugung (13) durch diesen Gateway (4) einer einzigen Gateway-Kennung, optional verbunden mit einem Geheimcode,
- Verbindung (14) dieses Gateway (4) mit einem speziellen Vermittlungsserver (9C), vorgesehen für das Hinzufügen des Gateway und Anforderung auf Erzeugen eines Gateway-Kontos, in Zusammenhang mit dieser Kennung, der Verbindungsschritt wird dabei vom genannten Gateway (4) ausgeführt.
- Erzeugung eines Gateway-Kontos, in Verbindung mit diesem Gateway (4),
- Benachrichtigung (15) dieses mindestens einen zentralen Anwendungsservers (5) über die Erzeugung des Gateway-Kontos,
das Verfahren umfasst außerdem die folgenden Schritte:
- Anforderung (22) durch einen zentralen Anwendungsserver (5) oder einen Gateway (4) auf Zuweisung eines zusätzlichen zwischengeschalteten Datenaustauschservers (9D2) zu diesem Gateway (4),
- Zuweisung (23), durch den zentralen Anwendungsserver (5) eines zusätzlichen zwischengeschalteten Datenaustauschservers (9D2) zu diesem Gateway (4);
- Versand (24), durch den zentralen Anwendungsserver (5) der Verbindungsparameter mit dem genannten zusätzlichen zwischengeschalteten Datenaustauschserver (9D2) an diesen Gateway (4).

4. Verfahren gemäß dem vorangehenden Anspruch, das einen weiteren Schritt umfasst:
- Validierung (16) des genannten Gateway-Kontos.

5. Verfahren gemäß Anspruch 3 oder 4, das weiterhin den Schritt umfasst:
- Erzeugung (17) durch den zentralen Anwendungsserver (5) eines neuen Eingangs, der diesem Gateway (4) in einer Bestandsdatenbank entspricht.

6. Verfahren gemäß einem der Ansprüche 3 bis 5, das weiterhin die Schritte umfasst:
- Zuweisung durch den zentralen Anwendungsserver (5) eines zusätzlichen zwischengeschalteten Befehlsvermittlungsservers (9C) zu diesem Gateway (4);
- Versand (18), durch den genannten zentralen Anwendungsserver (5) der Verbindungsparameter mit dem genannten Befehlsvermittlungsservers (9C) an diesen Gateway (4),
- Verbindung dieses Gateways (4) mit dem genannten Steuerungsvermittlungsserver (9C) und Aufbau einer Sitzung mittels dieser Verbindungsparameter zum Austausch von Befehlen.

7. Verfahren gemäß einem der Ansprüche 3 bis 6, das weiterhin die Schritte umfasst:
- Zuweisung (19), über einen zentralen Anwendungsserver (5) eines ersten zwischengeschalteten Datenaustauschservers (9D1) zu dem genannten Gateway (4),
- Versand (20), über den genannten zentralen Anwendungsserver (5) der Verbindungsparameter des genannten ersten zwischengeschalteten Datenaustauschservers (9D1) zu dem genannten Gateway (4).

8. Verfahren gemäß einem der vorangehenden Ansprüche, das weiterhin die Schritte umfasst:
- Verbindung (21, 25) dieses Gateways (4) mit dem genannten zwischengeschalteten Datenaustauschserver (9D1, 9D2) und Aufbau einer Sitzung mittels dieser Verbindungsparameter, zum Austausch von Befehlen.

9. Verfahren gemäß einem der Ansprüche 3 bis 8, das weiterhin einen Schritt der Herstellung von Schnittstellen von mehreren Sensoren mit diesem Gateway (4) umfasst, die Sensoren der verschiedenen Gateways des Instrumentierungssystems sind dazu konfiguriert, verschiedene Protokolle zu nutzen.

10. Verfahren gemäß einem der Ansprüche 6 bis 8, bei dem der Schritt der Zuweisung dynamisch erfolgt.

11. Verfahren gemäß einem der Ansprüche 3 bis 10, umfassend eine Wiederaufnahme der Kommunikation nach einer Unterbrechung der Verbindung mit einem Gateway (4), die Wiederaufnahme umfasst dabei die folgenden Schritte:
- Anforderung (30) durch den Gateway (4), dessen Verbindung unterbrochen wurde, auf Zuweisung mindestens eines zwischengeschalteten Wiederherstellungsservers (9R) zu dem Gateway (4), dessen Verbindung unterbrochen wurde,
- Zuweisung (31), über einen zentralen Anwendungsserver (5) mindestens eines ersten zwischengeschalteten Wiederherstellungsservers (9R) zu dem genannten Gateway (4), dessen Verbindung unterbrochen wurde,
- Versand (32), über den genannten zentralen Anwendungsserver (5), der Verbindungsparameter mit dem genannten ersten zwischengeschalteten Wiederherstellungsservers (9R) zu dem genannten Gateway (4), dessen Verbindung unterbrochen wurde,
- Verbindung (33) des genannten Gateways (4), dessen Verbindung unterbrochen wurde, mit dem genannten mindestens einen Wiederherstellungsserver (9R) und Aufbau einer Sitzung mittels dieser Verbindungsparameter,
- Übertragung (34) an diesen mindestens einen Wiederherstellungsserver (9R) der Zwischendaten, die während dieser Unterbrechung lokal von diesem Gateway (4), dessen Verbindung unterbrochen wurde, gespeichert wurden.

12. Verfahren gemäß einem der Ansprüche 3 bis 11, umfassend die Diagnose eines Gateways, wobei die Diagnose die folgenden Schritte umfasst:
- Bestimmung (40) durch einen zentralen Anwendungsserver (5) des Bedarfs zur Durchführung einer Diagnose eines Gateways (4),
- Zuweisung (41), über diesen zentralen Anwendungsserver (5) eines ersten zwischengeschalteten Diagnoseservers (9D) zu dem zu diagnostizierenden Gateway (4),
- Versand (42), über den genannten zentralen Anwendungsserver (5) der Verbindungsparameter mit dem genannten zwischengeschalteten Diagnoseserver (9D) an den zu diagnostizierenden Gateway (4),
- Versand (43), über den genannten zentralen Anwendungsserver (5) eines Diagnosebefehls an den zu diagnostizierenden Gateway (4),
- Verbindung (44) des genannten zu diagnostizierenden Gateways (4), mit dem genannten zwischengeschalteten Diagnoseserver (9D) und Aufbau einer Sitzung mittels dieser Verbindungsparameter,
- Übertragung (45) der Diagnosedaten an diesen zwischengeschalteten Diagnoseserver (9D).

13. Verfahren gemäß dem vorangehenden Anspruch, bezüglich der Diagnose der Zuverlässigkeit des zu diagnostizierenden Gateways, das einen Schritt des Sammelns aller von diesem zu diagnostizierenden Gateway übertragenen und/ oder empfangenen Informationen enthält oder die Diagnose der Zuverlässigkeit eines Sensors betrifft und einen Schritt des Sammelns und der Analyse der Frequenz der von diesem Sensor übertragenen Daten enthält.

## Claims

1. Instrumentation system comprising at least one set (3) of sensors (1), at least one gateway (4), at least one central application server (5), and an Internet communication network, said at least one gateway (4) being connected to said Internet communication network, each sensor (1) of a set (3) being interfaced to said Internet communication network via a gateway (4), said at least one central application server (5) being connected to said Internet communication network,
the system also includes a plurality of intermediate exchange servers (9),
for which a central application server (5) comprises a client capable of allowing said central application server (5) to connect and initiate a communication session with at least one of the intermediate exchange servers (9);
for which said at least one gateway (4) includes a client capable of allowing said at least one gateway (4) to connect and initiate at least one communication session with at least one of said intermediate exchange servers (9);
the system being configured so that all exchanges between the central application server (5) and the at least one gateway (4) take place via the intermediate exchange server (5);
and wherein said at least one gateway (4) is configured to: receive measurement data from at least one sensor (1), connect to the Internet communication network and initiate at least one communication session with at least one intermediate exchange server (9), transmit to the intermediate exchange server (9) a message comprising a gateway identifier, at least one sensor identifier and at least some of said measurement data, **characterized in that** in the system, the intermediate exchange server (9) is configured to transmit said message to the central application server (5),
the system is also configured to perform the following steps:
- request (22), by a central application server (5) or by a gateway (4), to assign an additional intermediate data exchange server (9D2) to said gateway (4),
- assignment (23), by a central application server (5), of an intermediate additional data exchange server (9D2), to said gateway (4)
- transmission (24), by said central application server (5), connection parameters to said additional intermediate data exchange server (9D2), to said gateway (4).

2. The instrumentation system according to claim 1, wherein the intermediate exchange server (9) is configured for: receiving from the central application server (5) a command message (10) comprising a gateway identifier, a command identifier and a command; transmitting this command message to the gateway (4) having an identifier corresponding to the gateway identifier specified in the command message (10); receiving from the gateway (4) a reply message (11) comprising the gateway identifier, the identifier and reply data; transmitting the reply message (11) to the central application server (5).

3. A method of using an instrumentation system, **characterized in that** it uses an instrumentation system according to claim 1 and **in that** it comprises the addition of a gateway, which addition of a gateway comprises the following steps:
- creation (13), by said gateway (4), of a unique gateway identifier, optionally combined with a secret code,
- connection (14) of said gateway (4) to an intermediate exchange server (9C) dedicated to the addition of the gateway, and request to create a gateway account, in connection with said identifier, with the connection step being performed by said gateway (4),
- creation of a gateway account associated with said gateway (4),
- notification (15) to said at least one central application server (5) of said gateway account creation,
while the process further comprises the following steps:
- request (22), by a central application server (5) or by a gateway (4), to assign an additional intermediate data exchange server (9D2) to said gateway (4),
- assignment (23), by a central application server (5), of an additional intermediate data exchange server (9D2), to said gateway (4)
- transmission (24), by said central application server (5), of connection parameters to said additional intermediate data exchange server (9D2), to said gateway (4).

4. Method according to the previous claim, including a further
step of:
validation (16) of said gateway account.

5. Method according to claim 3 or 4, including a further step of:
- creation (17), by a central application server (5), of a new input corresponding to said gateway (4) in an inventory database.

6. Method according to any of claims 3 to 5, further comprising the steps of:
- assignment, by a central application server (5), of an intermediate command exchange server (9C), to said gateway (4)
- transmission (18), by said central application server (5), of connection parameters to said intermediate command exchange server (9C), to said gateway (4).
- connection of said gateway (4) to said intermediate command exchange server (9C) and establishing of a session, by means of said connection parameters, for exchanging commands.

7. Method according to any of claims 3 to 6, further comprising the steps of:
- assignment (19), by a central application server (5), of a first intermediate data exchange server (9D1), to said gateway (4)
- transmission (20), by said central application server (5), of connection parameters to said intermediate data exchange server (9D1), to said gateway (4).

8. Method according to any of the previous claims, further comprising the steps of:
- connection (21, 25) of said gateway (4) to said intermediate data
exchange server (9D1, 9D2) and establishing of a session, by means of said connection parameters, in order to exchange data.

9. Method according to any of claims 3 to 8, comprising a further step of interfacing a plurality of sensors with said gateway (4), the sensors of the different gateways of the instrumentation system being configured to use different protocols.

10. Method according to any of claims 6 to 8, in which the assignment step is carried out dynamically.

11. Method according to any of claims 3 to 10 comprising a resumption of communication following a connection interruption of a gateway (4), the resumption including the following steps:
- request (30), by the gateway (4) whose connection has been interrupted, to assign at least one recovery intermediate exchange server (9R) to said gateway (4) whose connection has been interrupted,
assignment (31), by a central application server (5), of at least one recovery intermediate exchange server (9R), to said gateway (4)
- transmission (32), by said central application server (5), of connection parameters to said recovery intermediate exchange server (9R), to said gateway (4) whose connection has been interrupted,
- connection (33), by the gateway (4) whose connection has been interrupted to the said at least one recovery intermediate exchange server (9R) and establishing of a session, by means of the said connection parameters,
- transmission (34) to the at least one recovery intermediate exchange server (9R) of the intermediate data, stored locally during said interruption by said gateway (4) whose connection has been interrupted.

12. Method according to any of claims 3 to 11 comprising a diagnosis of a gateway, with the diagnosis comprising the following steps: determination (40), by a central application server (5), of the need to diagnose a gateway (4),
- assignment (41), by the said central application server (5), of an intermediate diagnostic exchange server (9D), to said gateway (4) to be diagnosed,
- transmission (42), by said central application server (5), of connection parameters to said intermediate diagnostic exchange server (9D), to said gateway (4) to be diagnosed.
- transmission (43), by said central application server (5), of a diagnostic command to said gateway (4) to be diagnosed,
- connection (44), of said gateway (4) to be diagnosed to the said intermediate diagnostic exchange server (9D) and establishing of a session, by means of the said connection parameters,
- transmission (45) to said intermediate diagnostic exchange server (9D) of the diagnostic data.

13. Method according to the previous claim, concerning the diagnosis of the reliability of the gateway to be diagnosed and including a step of collecting all the information transmitted and/or received by this gateway to be diagnosed or relating to the reliability diagnosis of a sensor and including a step of collecting and analyzing the frequency of the data transmitted by this sensor.
